# EUROPÄISCHE PATENTSCHRIFT

(11) **EP 1 439 738 B1**
(45) Veröffentlichungstag und Bekanntmachung des Hinweises auf die Patenterteilung: **12.03.2014**
(21) Anmeldenummer: 04000446.7
(22) Anmeldetag: 12.01.2004
(51) Int. Cl.: H05B 3/50

(54) **Heizvorrichtung mit PTC-Elementen**
Heating device comprising PTC-elements
Dispositif de chauffage comprenant des éléments PTC

(30) Priorität: 14.01.2003 DE 10301056
(43) Veröffentlichungstag der Anmeldung: 21.07.2004
(73) Patentinhaber: Denso Automotive Deutschland GmbH, 85386 Eching (DE)
(72) Erfinder: Lautsch, Andreas, 85386 Eching (DE); Erber, Markus, 85386 Eching (DE)
(74) Vertreter: Klingseisen, Franz

(56) Entgegenhaltungen:
- DE-A1- 4 330 878
- DE-A1- 10 015 905
- DE-A1- 19 933 013
- DE-A1- 19 957 452
- FR-A1- 2 742 384

## Beschreibung

Die Erfindung bettifft eine Heizvorrichtung mit PTC-Elementen für die Erwärmung eines Luftstroms, insbesondere für eine Klimaanlage in einem Kraftfahrzeug

Aus DE 39 02 206 ist eine derartige Heizvorrichtung bekannt, wobei einzelne PIC-Elemente nebeneinander an einer Trägereinrichtung angebracht sind, die ein im Querschnitt U-föimiges Aluminiumprofil umfasst. Die einzelnen PTC-Elemente liegen an einer Kontaktplatte an, die in dieses U-Profil eingesetzt ist und an einem Endbereich des Profils mit einer Anschlusslasche versehen ist. Bei diesem Aufbau werden alle PTC-Elemente der Trägereinrichtung gleichzeitig mit Heizstrom beaufschlagt Zur Verbesserung des Wärmeübergangs sind auf der Trägereinrichtung Lamellen klemmend aufgesetzt.

Aus FR-A1-2 742 384 ist eine Heizvorrichtung nach dem Oberbegriff des Anspruchs 1 bekannt, wonach in Abständen voneinander zwischen Lamellenpaketen angeordnete PIC-Elemente vorgesehen sind. Zwischen mehreren solchen Lamellenpaketen sind mehrere Reihen von PIC-Elementen angeordnet, die getrennt voneinander angesteuert werden können, wobei die PTC-Elemente einer Reihe nicht unterschiedlich voneinander angesteuert werden können

DE 100 15 905 A1 beschreibt eine Vorrichtung zur Beheizung von Innenräumen von Kraftfahrzeugen, bei der PTC-Elemente auf einem elektrischen Kontaktstreifen 16 aufliegen und mit einem Profilrohr in Wärmeleitkontakt stehen, das einen Heizstab zwischen zwei Trägereinrichtungen an den beiden Enden des Heizstabes bildet. Der elektrische Kontaktstieifen ist durch einen Isolierstreifen von dem Profilrohr getrennt und versorgt alle Heizelemente in dem Heizstab.

Aus DE 199 33 013 A1 ist ein PTC-Heizelement mit Heizzonen bekannt, wobei zwischen Seitenteilen nebeneinander liegend und durch Lamellen voneinander getrennte Heizelemente gehalten sind. Etwa in der Mitte zwischen den Seitenteilen ist quer zur Längserstreckung der Heizelemente eine elektrische Isolation vorgesehen, sodass auf beiden Seiten der Isolation zwei getrennte Heizzonen entstehen.. Nach einer weiteren Ausführungsform wird auch noch eine Zwischen den Reihen von Heizelementen angeordnete Isolation vorgesehen, auf deren beiden Seiten wieder Gruppen von Heizelementen als im Wesentlichen voneinander unabhängige Heizzonen entstehen.

Der Erfindung liegt die Aufgabe zugrunde, eine Heizvorrichtung dieser Art so auszubilden, dass eine feinfühlige Steuerung der Wärmezufuhr an den zu erwärmenden Luftstrom möglich ist.

Diese Aufgabe wird erfindungsgemäß durch die Merkmale des Anspruchs 1 gelöst. Dadurch, dass die an der Trägereinrichtung angebrachten PTC-Elemente getrennt voneinander mit einem Stromanschluss versehen und getrennt ansteuerbar sind, kann die dem Luftstom zuzuführende Wärme feinfühlig gesteuert werden, indem beispielsweise nur eines oder mehrere der PTC-Elemente mit Strom beaufschlagt werden. Auch kann die Temperatur in verschiedene Zonen eines Strömungskanals unterschiedlich eingestellt werden, so dass insgesamt bei minimaler Stromzufuhr zur Heizeinrichtung eine optimale Steuermöglichkeit der Temperatur erreicht wird, indem nur jene Zonen beheizt werden, in denen eine vorgegebene Heizleistung benötigt wird.

Von Vorteil ist, wenn die einzelnen PTC-Elemente nur von einer Seite der Trägereinrichtung aus mit Strom versorgt werden, weil hierdurch nur auf einer Seite z. B. eines Rahmens, an dem die Trägereinrichtung befestigt ist, Anschlüsse für die Stromversorgung und für die An-steuerung der PTC-Elemente vorzusehen sind. Hierdurch ergibt sich eine Verringerung des Montageaufwands verbunden mit einer kostengünstigen Herstellung.

Beispielsweise Ausführungsformen der Erfindung werden nachfolgend anhand der Zeichnung näher erläutert. Es zeigen
- Fig. 1: schematisch eine Trägereinrichtung mit PTC-Elementen an einem Rahmenteil,
- Fig. 2: im Einzelnen eine Trägereinrichtung entsprechend Fig. 1,
- Fig. 3: mehrere nebeneinander angeordnete Trägereinrichtungen in einem von Luft durchströmten Kanal,
- Fig. 4: eine Ausführungsform einer Trägereinrichtung zwischen zwei gegenüberliegenden Rahmenteilen,
- Fig. 5: eine Ausführungsform nach Fig. 2 mit Steckverbindung,
- Fig. 6: in Strömungsrichtung der zu erwärmenden Luft ein Heizregister entsprechend Fig. 3,
- Fig. 7: eine Stirnansicht des Heizregisters von rechts in Fig. 6, und
- Fig. 8: eine Fig. 6 entsprechende Ansicht des Heizregisters mit Zonenaufteilung.

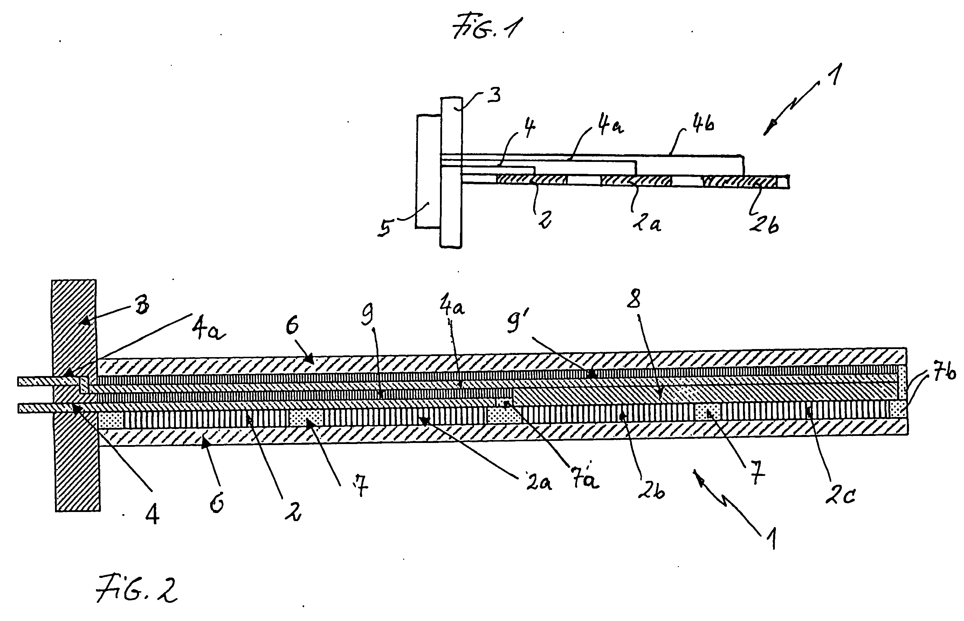

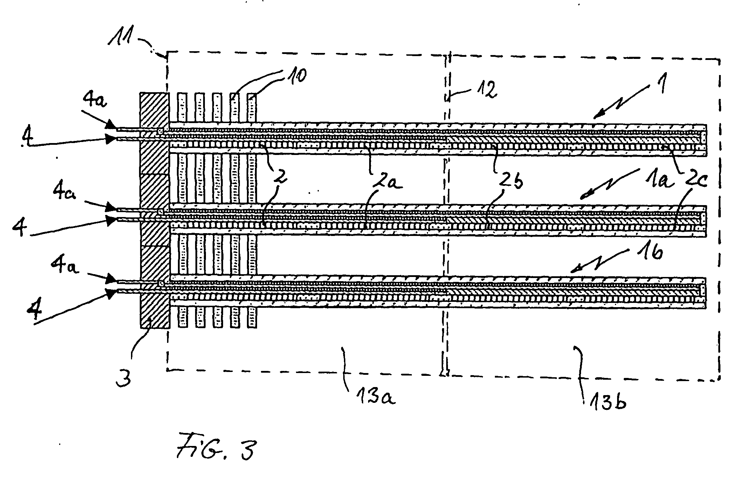

Fig. 1 zeigt schematisch eine als Stab oder Platte wiedergegebene Trägereinrichtung 1, an der nebeneinander PTC-Elemente 2, 2a, 2b angebracht sind. Die Trägereinrichtung 1 ist an einem Rahmenteil 3 derart befestigt, dass die Trägereinrichtung mit den PTC-Elementen sich quer zur Strömungsrichtung der zu erwärmenden Luft erstreckt, die bei dem dargestellten Ausführungsbeispiel etwa senkrecht zur Zeichenebene strömt. Das Rahmenteil 3 kann hierbei in der Wand eines nicht dargestellten Strömungskanals eingesetzt sein, wie z. B. Fig. 3 zeigt.

Die einzelnen PTC-Elemente 2, 2a, 2b sind getrennt voneinander mit Anschlussleitungen 4, 4a, 4b verbunden, die zu Anschlüssen am Rahmenteil 3 auf einer Seite der Trägereinrichtung 1 führen. Bei 5 ist schematisch eine Anschluss- und Steuereinrichtung dargestellt, die am Rahmenteil 3 angebracht sein kann und von der aus die einzelnen PTC-Elemente 2, 2a, 2b getrennt voneinander mit Strom versorgt und getrennt voneinander angesteuert werden können. Die Anschluss- und Steuereinrichtung 5 kann auch an einer anderen Stelle entfernt vom Rahmenteil 3 positioniert sein.

Fig. 2 zeigt im Einzelnen einen Längsschnitt durch eine Trägereinrichtung 1 mit vier nebeneinander angeordneten PTC-Elementen 2 bis 2c, die in einem Metallprofil 6 der Trägereinrichtung 1 in Abständen voneinander angeordnet sind, wobei zwischen den einzelnen PTC-Elementen Isoliermaterial 7 vorgesehen ist. Bei dem dargestellten Ausführungsbeispiel sind die beiden PTC-Elemente 2 und 2a mit einer Anschlussleitung 4 verbunden, die vom Rahmenteil 3 aus sich über die beiden PTC-Elemente 2 und 2a erstreckt und mit diesen elektrisch leitend verbunden ist. Die beiden PTC-Elemente 2b und 2c sind mit einer gesonderten Leitung 4a elektrisch leitend verbunden, die in einem Abstand von der Leitung 4 durch die Trägereinrichtung 1 verläuft und bei dem dargestellten Ausführungsbeispiel unter Zwischenlage eines Kontaktelements 8 mit den beiden PTC-Elementen 2b und 2c elektrisch leitend verbunden ist. Zwischen den nebeneinander verlaufenden Strängen der Leitungen 4 und 4a ist eine Schicht 9 aus Isoliermaterial vorgesehen. Eine entsprechende Isolierschicht 9' ist zwischen der oberen Leitung 4a und dem oberen Teil des Metallprofils 6 angebracht. Das Isoliermaterial 7a zwischen den PTC-Elementen 2a und 2b erstreckt sich bis zur Isolierschicht 9, so dass die beispielsweise als Kontaktplatte ausgebildete Leitung 4 stirnseitig von dem beispielsweise plattenförmigen Kontaktelement 8 elektrisch isoliert ist. Die Stirnseite des Metallprofils 6 ist mit Elementen aus Isoliermaterial 7b abgeschlossen.

Fig. 3 zeigt ein Heizregister mit drei nebeneinander angeordneten Trägereinrichtungen 1, 1a und 1b nach Fig. 2, wobei mit 10 Lamellen aus wärmeleitendem Material bezeichnet sind, die zur Verbesserung des Wärmeübergangs mit den einzelnen Trägereinrichtungen 1 wärmeleitend verbunden sind. Diese Lamellen 10 werden über die Länge der Trägereinrichtungen 1 in einem Abstand voneinander vorgesehen.

Bei 11 ist in Fig. 3 die Begrenzungswand eines senkrecht zur Zeichnungsebene von Luft durchströmten Kanals angedeutet, wobei auf einer Seite des Kanals die Rahmenteile 3 des Heizregisters eingesetzt sind. Im Bereich der Trennlinie zwischen den unterschiedlich ansteuerbaren Gruppen von PTC-Elementen 2, 2a und 2b, 2c verläuft eine Trennwand 12, die den von der äußeren Begrenzungswand 11 gebildeten Strömungskanal in einen Strömungskanal 13a und 13b unterteilt. Die freien Enden der Trägereinrichtungen können mit der Kanalwand 11 oder einem entsprechenden Rahmenteil verbunden sein. Beispielsweise kann der Strömungskanal 13a in einer Klimaanlage für ein Kraftfahrzeug zum Fußbereich der Fahrgastzelle führen, während der Strömungskanal 13b mit einem Luftauslass im Kopfbereich eines Fahrgastes verbunden ist. Durch unterschiedliche Ansteuerung der im Strömungskanal 13a liegenden PTC-Elemente 2 und 2a gegenüber den im Strömungskanal 13b liegenden PTC-Elementen 2b und 2c kann der Luftstrom in den beiden Kanälen unterschiedlich aufgeheizt werden, so dass sich die erwünschte Temperaturschichtung in der Fahrgastzelle ergibt.

Die Trennwand 12 kann in Strömungsrichtung vor und hinter dem Heizregister oder auch nur hinter dem Heizregister im Strömungskanal 11 angeordnet sein, während sich das Heizregister über die gesamte Querschnittsfläche des Strömungskanals 11 erstreckt.

Zusätzlich können die einzelnen PTC-Elemente in einem der Strömungskanäle 13a und 13b unterschiedlich mit Heizstrom versorgt werden, so dass beispielsweise im Strömungskanal 13a nur die PTC-Elemente 2 und 2a der Trägereinrichtung 1 beheizt werden, während die entsprechenden PTC-Elemente der Trägereinrichtungen 1a und 1b nicht mit Strom versorgt werden. Gleichzeitig können beispielsweise alle PTC-Elemente 2b und 2c der drei Trägerelemente 1, 1a und 1b im Strömungskanal 13b für eine maximale Heizleistung angesteuert werden. Durch die getrennte Stromversorgung der einzelnen PTC-Elemente oder von Gruppen von PTC-Elementen ist eine vielfältige Auswahl der für den Heizbetrieb einzusetzenden PTC-Elemente möglich, so dass eine entsprechend feinfühlige Steuerung der Heizleistung in den einzelnen Strömungskanälen möglich ist.

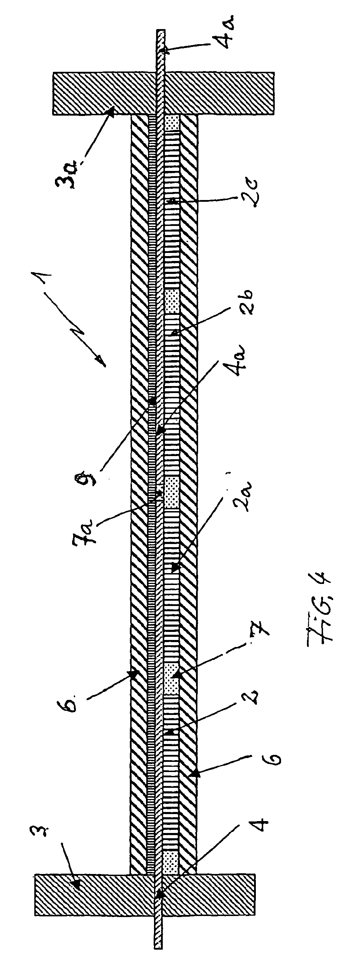

Fig. 4 zeigt eine Ausführungsform, bei der eine Trägereinrichtung 1 zwischen zwei Rahmenteilen 3 und 3a eingesetzt ist und jeweils zwei PTC-Elemente 2, 2a und 2b, 2c über eine getrennte Leitung 4 und 4a mit Strom versorgt werden, wobei die zweite Leitung 4a vom gegenüberliegenden Rahmenteil 3a aus zu den PTC-Elementen 2b und 2c führt. Zwischen den gegenüberliegenden, bei einer praktischen Ausführungsform als Kontaktplatten ausgebildeten Leitungen 4 und 4a ist Isoliermaterial 7a vorgesehen, das die beiden Leitungen voneinander trennt.

Auch bei einer Ausgestaltung nach Fig. 4 kann die Wärmezufuhr an den zu erwärmenden Luftstrom oder die zu erwärmenden Luftströme durch die getrennte Ansteuerung einzelner oder Gruppen von einzelnen PTC-Elementen feinfühlig dosiert werden, jedoch hat die Ausführungsform nach den Fig. 1 bis 3 den Vorteil, dass nur auf einer Seite eines Strömungskanals Anschlüsse für eine Vielzahl von PTC-Elementen vorgesehen zu werden brauchen, wodurch sich der Herstellungs- und Montageaufwand erheblich vereinfacht, ohne dass die Möglichkeit beeinträchtigt wird, die Wärmezufuhr durch Ansteuerung einzelner PTC-Elemente feinfühlig zu steuern.

Es sind verschiedene Abwandlungen der beschriebenen Ausführungsformen möglich. So kann beispielsweise bei der in Fig. 2 wiedergegebenen Trägereinrichtung 1 mit vier PTC-Elementen 2 bis 2c jedes einzelne PTC-Element mit einer gesonderten Anschlussleitung versehen sein oder es können an einer Trägereinrichtung 1 auch mehr als vier PTC-Elemente vorgesehen werden, die einzeln oder in Gruppen mit jeweils einer Anschlussleitung versehen sind. Ebenso ist es möglich, an einer Trägereinrichtung beispielsweise nur zwei PTC-Elemente vorzusehen, die getrennt ansteuerbar sind. In gleicher Weise kann ein Heizregister nach Fig. 3 mit mehreren solchen Trägereinrichtungen bestückt werden, wobei sich diese auch in einen dritten Strömungskanal erstrecken können, wenn auf einer verlängerten Trägereinrichtung weitere PTC-Elemente angebracht sind..

Auch kann der Aufbau der einzelnen Trägereinrichtungen 1 unterschiedlich zu dem wiedergegebenen Ausführungsbeispiel ausgebildet sein. Beispielsweise können anstelle eines Metallprofils 6 wärmeleitende Platten vorgesehen werden, zwischen denen die PTC-Elemente mit getrennten Kontaktplatten als Anschlussleitungen durch Klebung oder mechanische Verbindung in Sandwichbauweise angeordnet sind.

Nach einer anderen Abwandlung können beispielsweise bei der Bauform nach Fig. 2 die PTC-Elemente 2b und 2c auf der in Fig. 2 oberen Seite der Anschlussleitung 4a in dem Metallprofil 6 so angeordnet sein, dass sie mit dem oberen Teil des Metallprofils 6 in wärmeleitendem Kontakt stehen. Hierdurch kann ein plattenförmiges Kontaktelement 8 entfallen, das in Fig. 2 die Distanz zwischen z. B. einer Leitungsplatte 4a und den PTC-Elementen 2b, 2c überbrückt. Die getrennten Anschlussleitungen 4 und 4a können auch nebeneinander in einer Ebene senkrecht zur Zeichnungsebene angeordnet sein, so dass sich ein kompakter Aufbau hinsichtlich der Dickenabmessung einer Trägereinrichtung 1 ergibt.

Nach einer weiteren Ausgestaltung können die PTC-Elemente auf einer flächigen Trägereinrichtung 1 in einem vorgegebenen Muster nebeneinander angeordnet werden, so dass beispielsweise in der Schnittdarstellung nach den Fig. 2 bis 4 senkrecht zur Zeichnungsebene hintereinander PTC-Elemente an der flächigen Trägereinrichtung 1 angeordnet sind. Hierbei können getrennte Anschlussleitungen von einzelnen PTC-Elementen oder von Gruppen von PTC-Elementen vorzugsweise zum gleichen Rahmenteil führen. Bei einer solchen Ausführungsform kann die Länge der Heizfläche in Strömungsrichtung vergrößert werden, wobei auch wiederum nur einzelne der in Strömungsrichtung hintereinander liegenden PTC-Elemente getrennt angesteuert werden können.

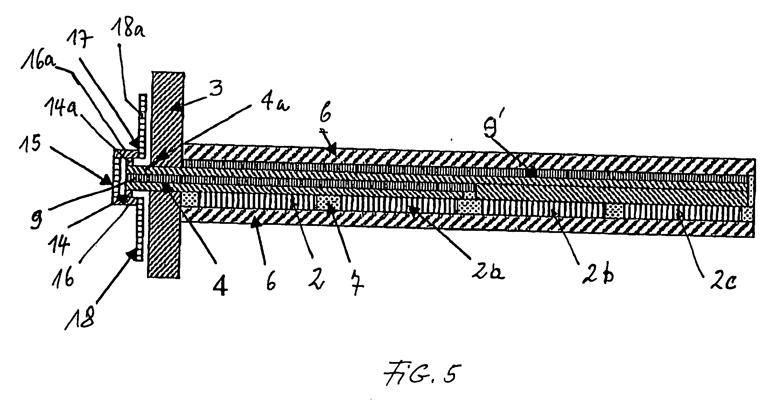

Fig. 5 zeigt eine Ausführungsform einer Trägereinrichtung nach Fig. 2, wobei die beiden Anschlussleitungen bzw. Leiterplatten 4 und 4a durch das Rahmenteil 3 nach außen geführt sind zusammen mit der dazwischen liegenden Isolierschicht 9, welche die beiden Leiterplatten voneinander trennt. Am äußeren Ende sind an den Leiterplatten abstehende Federelemente 14 und 14a angebracht, auf die ein Anschlussstecker aufgesteckt ist. Der Anschlussstecker ist durch einen Isolator 15 in zwei Anschlusssektoren unterteilt, die jeweils durch ein Kontaktelement 16, 16a und eine daran bei 17 angelötete Leiterplatte 18 bzw. 18a ausgebildet sind. Bei dem dargestellten Ausführungsbeispiel hält der Isolator 15 die beiden Steckerhälften so zusammen, dass die Federkräfte der Federelemente 14 und 14a durch den Anschlussstecker aufgenommen werden.

Durch einen Anschlussstecker dieser Art kann die Montage vereinfacht werden.

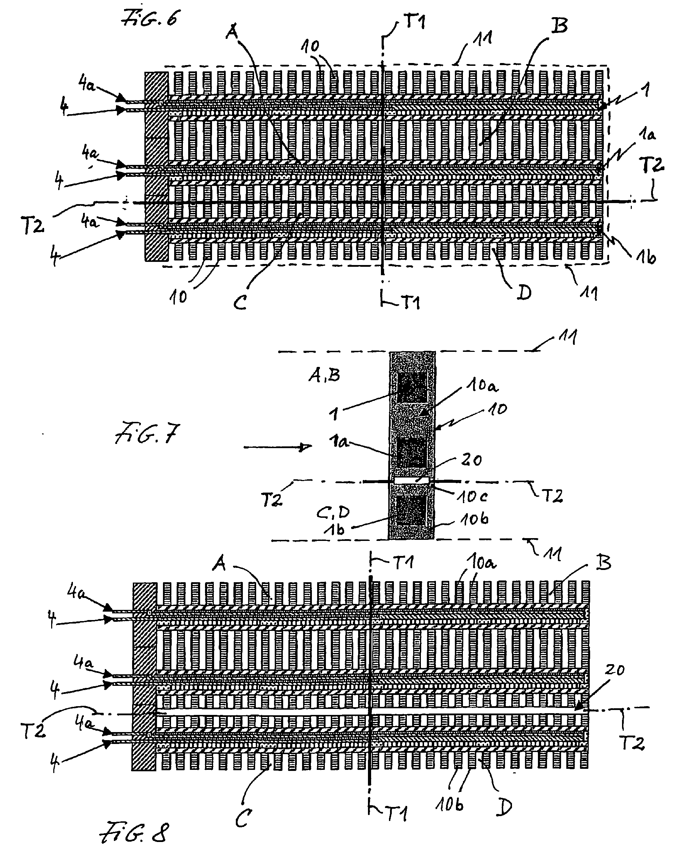

Fig. 6 zeigt in der Ansicht von Fig. 3 ein Heizregister mit drei Trägereinrichtungen 1, 1a und 1b, die jeweils einen Heizstab von etwa quadratischem Querschnitt bilden, wie Fig. 7 zeigt. Das Heizregister ist in einen Strömungskanal eingesetzt, dessen Begrenzungswand bei 11 in Fig. 6 und 7 angedeutet ist.

Der Strömungskanal 11 wird in vier thermische Beeinflussungszonen A, B, C und D unterteilt, die durch Trennlinien T1 und T2 wiedergegeben sind. Längs der Trennlinie T1 kann eine Trennwand 12, wie in Fig. 3 gezeigt, verlaufen, es ist aber nicht erforderlich, für die Unterteilung des Strömungskanals in thermische Beeinflussungszonen eine Trennwand vorzusehen, weil die PTC-Elemente auf der linken Seite der Trennlinie T1 in Fig. 6 unterschiedlich von den PTC-Elementen auf der rechten Seite angesteuert werden können.

Die Trennung zwischen den Beeinflussungszonen A und C bzw. B und D wird durch eine Querschnittsverminderung der Lamellen 10 längs der Trennlinie T2 erreicht. Fig. 7 zeigt eine solche Querschnittsverminderung in Form einer Aussparung 20 zwischen den Heizstäben 1a und 1b. Diese Aussparung 20 in den Lamellen 10 dient zur thermischen Entkopplung zwischen dem oberen Bereich 10a und dem unteren Bereich 10b der Lamellen 10. Durch die beiderseits der Aussparungen 20 verbleibenden dünnen Stegabschnitte 10c der Lamellen ist eine thermische Beeinflussung zwischen den Zonen A und C bzw. B und D vernachlässigbar, wenn beispielsweise nur der Heizstab 1b beheizt wird, nicht aber die Heizstäbe 1 und 1a.

Fig. 8 zeigt ein Heizregister entsprechend Fig. 6, wobei längs der Trennlinie T2 die Lamellen 10 vollständig voneinander getrennt sind, so dass die Stegabschnitte 10c in Fig. 7, die nur einen geringen Verbindungsquerschnitt haben, vollständig entfallen. Dadurch wird der obere Lamellenabschnitt 10a vollständig von dem unteren Lamellenabschnitt 10b getrennt.

In Strömungsrichtung hinter dem Heizregister nach den Fig. 6 bis 8 können separate Kanäle vorgesehen sein, deren Querschnitt den thermischen Beeinflussungszonen A bis D angepasst ist, so dass beispielsweise der durch die Zone A strömende Luftstrom durch einen gesonderten Kanal zum Kopfbereich des Fahrers geleitet wird, während der durch die Zone D strömende Luftstrom durch einen hinter dem Heizregister beginnenden separaten Kanal zum Fußbereich des Beifahrersitzes geleitet wird.

## Patentansprüche

1. Heizvorrichtung einer Klimaanlage in einem Kraftfahrzeug, mit PTC-Elementen (2), die an einer Trägereinrichtung (1) angebracht sind, die sich von einem Rahmenteil (3) quer zu einem zu erwärmenden Luftstrom erstreckt, wobei einzelne PTC-Elemente oder Gruppen von an der Trägereinrichtung angebrachten PTC-Elementen (2 bis 2c) getrennt voneinander mit jeweils einer Leiterplatte (4, 4a) verbunden und zur Ausbildung von thermisch unterschiedlich beeinflussbaren Zonen (A bis D) getrennt voneinander ansteuerbar sind,
**dadurch gekennzeichnet,**
**dass** die Trägereinrichtung (1) als ein stab- oder plattenförmiges Metallprofil (6) mit beabstandeten Seitenteilen ausgebildet ist, in dem in Abständen voneinander die PTC-Elemente (2 bis 2c) so angeordnet sind, dass sie an dem Metallprofil (6) in wärmeleitendem Kontakt anliegen,
wobei die durch das Metallprofil (6) verlaufenden Leiterplatten (4, 4a) durch eine Isolierschicht (9) voneinander getrennt sind

2. Heizvorrichtung nach Anspruch 1, wobei die Leiterplatten (4, 4a) für die an einer Trägereinrichtung (1) angebrachten PTC-Elemente nur von einer Seite der Trägereinrichtung aus zu den einzelnen PTC-Elementen oder Gruppen von diesen führen.

3. Heizvorrichtung nach Anspruch 2, wobei die von einer Isolierschicht (9) voneinander getrennten Leiterplatten (4, 4a) durch das Rahmenteil (3) nach außen geführt und mit abstehenden Federelementen (14, 14a) versehen sind, auf die ein Anschlussstecker aufsteckbar ist, der durch einen Isolator (15) in Anschlusssektoren unterteilt ist.

4. Heizvorrichtung nach einem der vorhergehenden Ansprüche, wobei sich wenigstens eine Trägereinrichtung (1) eines Heizregisters durch wenigstens zwei voneinander getrennte Strömungskanäle (13a, 13b) erstreckt.

5. Heizvorrichtung nach einem der vorhergehenden Ansprüche, wobei zwischen den Trägereinrichtungen (1) eines Heizregisters wärmeleitende Lamellen (10) angeordnet sind, die zur thermischen Entkoppelung zwischen den unterschiedlich beheizbaren Zonen (A bis D) zwischen benachbarten Trägereinrichtungen (1) eine Querschnittsverminderung aufweisen oder vollständig voneinander getrennt sind.

6. Heizvorrichtung nach Anspruch 5, wobei die Querschnittsverminderung der Lamellen (10) durch eine Aussparung (20) in den Lamellen ausgebildet ist.

## Claims

1. Heating device of an air conditioning system in an automobile, comprising PTC elements (2) which are mounted on a support means (1) extending from a frame part (3) transverse to a stream of air to be heated, wherein individual PTC elements or groups of PIC elements (2 to 2c) mounted on the support means are each connected with one respective conductor plate (4, 4a) separately from one another, and can be triggered separately from one another for forming zones (A to D) which can be differently thermally influenced,
**characterised in that**
the support means (1) is embodied as a bar- or plate-shaped metal profile (6) having spaced side parts, wherein the PTC elements (2 to 2c) are arranged spaced apart from each other in this metal profile in such a way that the PTC elements are in heat transferring contact with the metal profile (6),
wherein the conductor plates (4, 4a) extending through the metal profile (6) are separated from each other by an isolation sheet (9)

2. Heating device according to claim 1, wherein the conductor plates (4, 4a) for the PIC elements mounted on a support means (1) lead only from a side of the support means to the individual PTC elements or groups thereof.

3. Heating device according to claim 2, wherein the conductor plates (4, 4a) separated from each other by an isolation sheet (9) are guided outwards through the frame part (3) and are provided with protruding resilient members (14, 14a) on which a connecting plug can be attached, which is partitioned into connecting sectors by means of an isolator (15).

4. Heating device according to one of the preceding claims, wherein at least a support means (1) of a heat register extends through at least two flow passages (13a, 13b) which are separated from each other

5. Heating device according to one of the preceding claims, wherein heat-transferring fins (10) are arranged between the support means (1) of a heat register, said fins having a reduction in cross-sectional area or being completely separated from each other, for thermal decoupling between the differently heatable zones (A to D) between adjacent support means (1)

6. Heating device according to claim 5, wherein the reduction in cross-sectional area of the fins (10) is formed by a recess (20) in the fins

## Revendications

1. Dispositif de chauffage d'un climatiseur dans un automobile, ayant des éléments PTC (2) montés sur un dispositif de support (1) qui s'étend d'une partie de cadre (3) transversalement à un courant d'air qui est à chauffer, chaque des éléments individuels PTC ou des groupes d'éléments PIC (2 à 2c), qui sont attachés au dispositif de support, étant raccordé séparément l'un de l'autre avec une plaque conducteur (4, 4a) et pouvant être déclenché séparément l'un de l'autre pour former des zones (A à D) qui peuvent être thermiquement influencées de façon différente,
**caractérisé en ce que**
le dispositif de support (1) est formé comme un profil de métal (6) en forme de bâton ou en plate-forme, ayant des parties latérales distantes l'une de l'autre, dans lequel les éléments PTC (2 à 2c) sont disposés séparément l'un de l'autre de façon d'être contigus avec le profil de métal (6) de manière thermoconductrice,
les plaques conducteur (4, 4a) s'étendant à travers le profil de métal (6) étant séparées l'une de l'autre par une couche de confinement (9)

2. Dispositif de chauffage selon la revendication 1, dans lequel les plaques conducteur (4, 4a) pour les éléments PTC fixés à un dispositif de support (1) conduisent seulement d'un côté du dispositif de support aux éléments PTC individuels ou aux groupes des éléments PTC

3. Dispositif de chauffage selon la revendication 2, dans lequel les plaques conducteur (4, 4a), qui sont séparées l'une de l'autre par une couche de confinement (9), sont guidées vers l'extérieur à travers la partie de cadre (3) et sont munies d'éléments saillants (14, 14a), sur lesquels un connecteur, qui est cloisonné en secteurs de raccordement par un isolateur, peut être attaché.

4. Dispositif de chauffage selon l'une quelconque des revendications précédentes, dans lequel au moins un dispositif de support (1) d'un corps de chauffe s'étend par au moins deux canaux d'écoulement (13a, 13b) séparés l'un de l'autre.

5. Dispositif de chauffage selon l'une quelconque des revendications précédentes, dans lequel des ailettes thermoconductrices (10) sont disposées entre les dispositifs de support (1) d'un corps de chauffe et ont une réduction de la coupe transversale ou sont complètement séparées l'une de l'autre, pour le découplage thermique entre les zones (A à D), qui peuvent être différemment chauffées, entre des dispositifs de support contigus (1).

6. Dispositif de chauffage selon la revendication 5, dans lequel la réduction de la coupe transversale des ailettes (10) est formée par un évidement (20) dans les ailettes
